# EUROPÄISCHE PATENTSCHRIFT

(11) **EP 1 488 991 B1**
(45) Veröffentlichungstag und Bekanntmachung des Hinweises auf die Patenterteilung: **15.08.2007**
(21) Anmeldenummer: 04014225.9
(22) Anmeldetag: 17.06.2004
(51) Int. Cl.: B62J 6/00, B62J 6/12, B60Q 1/44, B60Q 1/26

(54) **Schaltung und Verfahren zum verzögerungsinduzierten Steuern einer Fahrradbeleuchtungseinheit**
Circuit for the brake dependent control of a bicycle lighting unit and a method therefor
Procédé et circuit pour le réglage d'éclairage d'une bicyclette lié au freinage

(30) Priorität: 18.06.2003 DE 10327456
(43) Veröffentlichungstag der Anmeldung: 22.12.2004
(73) Patentinhaber: Busch & Müller KG, 58540 Meinerzhagen (DE)
(72) Erfinder: Müller, Rainer, 58540 Meinerzhagen (DE)
(74) Vertreter: Kahlhöfer, Hermann

(56) Entgegenhaltungen:
- EP-A- 0 904 982
- EP-A- 1 244 192
- EP-A- 1 270 397
- DE-A1- 4 231 435
- DE-U1- 29 611 957
- PATENT ABSTRACTS OF JAPAN Bd. 1995, Nr. 11, 26. Dezember 1995 (1995-12-26) & JP 07 229909 A (SANYO ELECTRIC CO LTD), 29. August 1995 (1995-08-29)

## Beschreibung

Gegenstand der Anmeldung ist ein Verfahren zum Steuern einer Beleuchtungseinheit eines Fahrrades, sowie eine Schaltung zum verzögerungsinduzierten Betrieb einer Beleuchtungseinrichtung eines Fahrrades.

Bei der Weiterentwicklung von Fahrrädern ist man darauf bedacht, die Bedienung des Fahrrades für den Benutzer möglichst komfortabel zu gestalten und die Sicherheit für den Fahrradfahrer und andere Verkehrsteilnehmer zu verbessern. Hierzu werden eine Vielzahl von Maßnahmen vorgeschlagen. Beispielsweise ist aus dem Stand der Technik bekannt, eine Beleuchtungseinheit eines Fahrrades über einen Helligkeitssensor zu steuern, der helligkeitsinduziert die Beleuchtungseinheit an- oder abschaltet, so dass beispielsweise beim Durchfahren eines Tunnels automatisch ein Frontscheinwerfer und ein Rücklicht des Fahrrades mit einer Spannungsquelle verbunden werden. Dies lässt sich in besonders einfacher Weise durchführen, wenn als Spannungsquelle eine Batterie oder ein Nabendynamo, wie er beispielsweise aus der DE 197 12 818 A1 bekannt ist, verwendet wird. Gerade die Verwendung eines Nabendynamos erweist sich als vorteilhaft, da ein solcher immer mit dem Vorderrad mitläuft, und somit das Zuschalten des Nabendynamos zu keinem wesentlich vergrößerten Kraftaufwand beim Benutzer des Fahrrades führt.

Eine wie oben dargelegte automatisierte Steuerung der Beleuchtungseinheit eines Fahrrades ist auch für zahlreiche andere Funktionseinheiten des Fahrrades in Abhängigkeit von anderen Kenngrößen als der Umgebungshelligkeit möglich. Beispielsweise ist es denkbar, eine Beleuchtungseinrichtung eines Fahrrades auch bei Vorliegen einer plötzlichen Verzögerung des Fahrrades in Betrieb zu setzen, um so dem nachfolgenden Verkehr zu signalisieren, dass das Fahrrad verzögert. Eine solche Verzögerung des Fahrrades kann aufgrund des leichten Gewichtes und der daraus folgenden geringen Trägheit des Fahrrades zu einer ausgesprochen plötzlichen und starken Verringerung des Abstandes zwischen dem Fahrrad und dem nachfolgenden Verkehr führen, was zu einer Gefährdung des Fahrradfahrers und anderer Verkehrsteilnehmer führen kann.

In diesem Zusammenhang ist aus der DE 42 31 435 A1 eine Schaltung bekannt, bei der eine der Frequenz des Dynamos proportionale Gleichspannung erzeugt wird und in Abhängigkeit einer wesentlichen Änderung dieser Gleichspannung ein Bremslicht eingeschaltet wird, um den nachfolgenden Verkehr auf die Verzögerung des Fahrrades hinzuweisen. Dieses aus dem Stand der Technik bekannte Verfahren ist zeitlich relativ träge, da über eine Vielzahl von Perioden des Signals des Dynamos integriert werden muss, um eine genügende Änderung des Gleichspannungssignals zu erhalten. Dies führt zu einem zeitlichen Abstand zwischen Einsetzen der Verzögerung und Einschalten des Bremslichtes. Aufgrund des geringen Gewichtes des Fahrrades stellt jedoch dieser zeitliche Abstand für starke Verzögerungen ein Gefahrenpotential dar, da sich der Abstand zum nachfolgenden Verkehr bei starker Verzögerung gegebenenfalls so schnell verringern kann, dass das Bremslicht erst eingeschaltet wird, wenn der Abstand zum nachfolgenden Verkehr bereits schlimmstenfalls bis auf null verringert ist.

Aus der EP 0 904 982 A2 ist eine Schaltung zur verzögerungsinduzierten Steuerung einer Beleuchtungseinrichtung eines Fahrrads gemäß Anspruch 7 bekannt. Bei diesem System ist ein Magnet an einer der Speichen eines Rades eines Fahrrades angebracht. Die Bewegung dieses Magneten wird über einen Reed Kontakt aufgenommen und anhand einer Auswertung dieses pulsförmigen Signals ein Rückschluss auf die Verzögerung des Fahrrades vorgenommen.

Hiervon ausgehend ist es eine Aufgabe der Erfindung, ein Verfahren zum verzögerungsinduzierten Betrieb einer Beleuchtungseinrichtung eines Fahrrades vorzuschlagen, das zuverlässig ein möglichst schnelles Ansprechen auf eine Verzögerung des Fahrrades ermöglicht. Eine weitere Aufgabe der Erfindung liegt darin, eine Schaltung zur verzögerungsinduzierten Steuerung einer Beleuchtungseinrichtung eines Fahrrades anzugeben.

Diese Aufgaben werden gelöst durch ein Verfahren mit den Merkmalen des Anspruchs 1 und eine Schaltung mit den Merkmalen des Anspruchs 14. Vorteilhafte Ausgestaltungen und Weiterbildungen sind Gegenstand der jeweils abhängigen Ansprüche.

Das erfindungsgemäße Verfahren zur Steuerung einer Beleuchtungseinrichtung eines Fahrrades, wobei die Beleuchtungseinrichtung einen Nabendynamo (1), einen Frontscheinwerfer (2) und ein Rücklicht (3) umfasst, wobei die Beleuchtungseinrichtung in einem ersten Normalmodus, in dem Frontscheinwerfer (2) und Rücklicht (3) elektrisch parallel mit dem Nabendynamo (1) verbunden sind, einem zweiten Normalmodus, in dem Frontscheinwerfer (2) und Rücklicht (3) grundsätzlich nicht elektrisch mit dem Nabendynamo (1) verbunden sind, oder in einem Verzögerungsmodus betrieben werden kann, umfasst die folgenden Schritte:
a) Bestimmung eines Betriebsmodus der Beleuchtungseinrichtung, der gleich dem ersten oder dem zweiten Normalmodus sein kann;
b) Bestimmung eines ersten zeitlichen Abstandes (Dt1) zweier Nulldurchgänge der durch den Nabendynamo (1) erzeugten elektrischen Spannung;
c) Berechnung eines Quotienten (Q) aus dem ersten zeitlichen Abstand (Dt1) und einem früheren zweiten zeitlichen Abstand (Dt2) zweier Nulldurchgänge der durch den Nabendynamo (1) erzeugten elektrischen Spannung;
d) Schalten der Beleuchtungseinrichtung in den Verzögerungsmodus, wenn der Quotient (Q) größer als ein vorgegebener Grenzwert (G) ist, falls die Beleuchtungseinrichtung im Betriebsmodus betrieben wird;
e) Schalten der Beleuchtungseinrichtung in den Betriebsmodus, wenn der Quotient (Q) kleiner oder gleich 1 ist, falls die Beleuchtungseinrichtung im Verzögerungsmodus betrieben wird und eine Pufferzeit seit dem letzten Auftreten eines Quotienten (Q), der kleiner als der vorgegebene Grenzwert (G) ist, verstrichen ist.

Der erste Normalmodus stellt den Betriebsmodus dar, in dem der Benutzer wünscht, dass der Frontscheinwerfer und das Rücklicht elektrisch parallel mit dem Nabendynamo verbunden sind, diese also Licht abstrahlen. Im zweiten Normalmodus sind grundsätzlich Frontscheinwerfer und Rücklicht nicht mit dem Nabendynamo verbunden, der Benutzer des Fahrrads wünscht also, dass Frontscheinwerfer und Rücklicht im Regelfall nicht leuchten. Trotzdem kann es aus Sicherheitsüberlegungen angebracht sein, in diesem Betriebsmodus eine Art Automatik vorzusehen, die bei Vorliegen bestimmter Voraussetzungen zu einem Aufleuchten von Frontscheinwerfer und/oder Rücklicht führt.

Die Bestimmung der zeitlichen Abstände von Nulldurchgängen der Wechselspannung, die der Nabendynamo erzeugt, ist eine sehr schnelle und zuverlässige Methode, festzustellen, ob das Fahrrad verzögert oder nicht. Herkömmlich wurde hier oftmals mit Integrationsverfahren gearbeitet, bei denen über eine Vielzahl von Perioden der Wechselspannung integriert werden musste. Bei dem erfindungsgemäßen Verfahren kann im Extremfall binnen zweier Halbperioden, also maximal einer Gesamtperiode bei verzögerter Geschwindigkeit, festgestellt werden, ob das Fahrrad verzögert oder nicht. Zudem sind diese Halb- oder Gesamtperioden für sich schon relativ klein, da ein Nabendynamo im Regelfall eine Vielzahl von Polen aufweist, so dass pro Umdrehung des Rades, in dessen Nabe der Nabendynamo ausgebildet ist, eine Vielzahl von Nulldurchgängen vorliegt.

Beim verzögerungsinduzierten Betrieb der Beleuchtungseinheit ist es so vorteilhaft möglich, über die Beleuchtungseinheit den nachfolgenden Verkehr auf die Verzögerung des Fahrrades aufmerksam zu machen.

Gemäß einer vorteilhaften Ausführungsform des erfindungsgemäßen Verfahrens ist im Verzögerungsmodus zumindest das Rücklicht elektrisch parallel mit dem Nabendynamo verbunden, falls der Betriebsmodus der zweite Normalmodus ist.

Im zweiten Normalmodus ist grundsätzlich weder Frontscheinwerfer noch Rücklicht in Betrieb. Erfindungsgemäß wird im Verzögerungsmodus zumindest das Rücklicht, gegebenenfalls auch der Frontscheinwerfer, mit dem Nabendynamo elektrisch parallel verbunden. Dies erlaubt in sehr einfacher Weise die Warnung zumindest des rückwärtigen Verkehrs.

Gemäß einer vorteilhaften Ausgestaltung des Verfahrens wird im Verzögerungsmodus zumindest das Rücklicht heller als im ersten Normalmodus und/oder moduliert und/oder zumindest ein zusätzliches Warnlicht betrieben.

Dies ermöglicht insbesondere dann, wenn der Betriebsmodus der erste Normalmodus ist, die schnelle Warnung des rückwärtigen Verkehrs vor der Verzögerung des Fahrrades. Eine modulierter Betrieb des Rücklichts und/oder des Frontscheinwerfers führt zu einem Flackern derselben, die gleichfalls die Aufmerksamkeit der anderen Verkehrsteilnehmer wecken kann. Die alternative oder kumulative Möglichkeit des Betriebes von zusätzlichen Warnlichtern, bevorzugt rückwärtigen zusätzlichen Warnlichtern, ermöglicht ebenfalls die Warnung der anderen Verkehrsteilnehmer.

Vorteilhafterweise beträgt die Pufferzeit weniger als 5 Sekunden, bevorzugt weniger als 3 Sekunden und besonders bevorzugt weniger als 2 Sekunden. Besonders vorteilhaft ist es in diesem Zusammenhang, dass die Pufferzeit einstellbar ist

Die Pufferzeit ist letztendlich eine Minimalzeit des Betriebes der Beleuchtungseinrichtung im Verzögerungsmodus, ohne Berücksichtigung einer Trägheit der Beleuchtungseinrichtung. Die Einstellbarkeit der Pufferzeit ermöglicht die Anpassung an unterschiedliche Gegebenheiten, beispielsweise unterschiedliche Fahrstile und Vorlieben des Fahrers oder auch an unterschiedliche Geländeprofile (beispielsweise unter Berücksichtigung von Steigungen und Gefällen) und ähnliches. Vorteilhafter Weise beträgt die Pufferzeit null. Dies kann insbesondere bei sportlicher Fahrweise von Vorteil sein.

Vorteilhafter Weise ist der erste (Dt1) und der zweite zeitliche Abstand (Dt2) der Abstand zweier Nulldurchgänge, zwischen denen eine vorbestimmbare Anzahl von Nulldurchgängen liegt. Besonders vorteilhaft ist in diesem Zusammenhang, dass der erste (Dt1) und der zweite zeitliche Abstand (Dt2) der zeitliche Abstand zweier jeweils direkt aufeinanderfolgender Nulldurchgänge ist.

Je nach Anwendung kann es vorteilhaft sein, eine von Null verschiedene Anzahl Nulldurchgängen zwischen den Nulldurchgängen abzuwarten, deren Abstand der erste Dt1 und der zweiten zeitliche Abstand Dt2 ist. Jedoch muss diese Anzahl für den ersten zeitlichen Abstand Dt1 und den zweiten zeitlichen Abstand Dt2 identisch sein.

Gemäß einer vorteilhaften Ausgestaltung des Verfahrens ist der Grenzwert G und/oder die Anzahl von Nulldurchgängen zwischen dem ersten und dem zweiten zeitlichen Abstand einstellbar. Besonders bevorzugt ist in diesem Zusammenhang, dass sich der Grenzwert in Abhängigkeit von der Art und Weise des Betriebes des Fahrrades ändert.
Diese Einstellbarkeit ermöglicht einerseits eine manuelle Anpassung der Ansprechempfindlichkeit, mit der die Beleuchtungseinheit in den Verzögerungsmodus versetzt wird und andererseits eine automatische adaptive Anpassung jeweils an die momentane Fahrsituation, beispielsweise unter Berücksichtigung der momentanen Geschwindigkeit, oder auch an andere Größen, beispielsweise persönlicher Fahrstil des Benutzers oder an das Geländeprofil, in dem beispielsweise Steigungen berücksichtigt werden. In diesem Zusammenhang ist es möglich, Daten eines Fahrradcomputers zu berücksichtigen.

Die Einstellbarkeit der Anzahl von Nulldurchgängen zwischen dem ersten und dem zweiten zeitlichen Abstand ermöglicht einerseits eine manuelle Anpassung der Auswertungsgeschwindigkeit an die momentane Situation oder Vorliebe des Fahrers und andererseits auch eine automatische adaptive Anpassung an die momentane Fahrsituation.

Vorteilhafter Weise wechselt der Betriebsmodus helligkeitsinduziert zwischen dem ersten und dem zweiten Normalmodus.

In diesem Zusammenhang ist es besonders vorteilhaft, dass der Frontscheinwerfer und das Rücklicht dann elektrisch parallel mit dem Nabendynamo verbunden werden, wenn der Wert der Helligkeit einen vorgegebenen Helligkeitsgrenzwert unterschreitet und der zweite Normalmodus als Betriebsmodus vorliegt.

Dies ermöglicht in vorteilhafter Weise, dass bei Verdunkeln der Umgebung des Fahrrades, beispielsweise bei Einfahrt in einen Tunnel oder bei Sonnenuntergang, automatisch die Beleuchtungseinrichtung eingeschaltet wird. Dies stellt eine Verbesserung der Sicherheitssituation beim Fahrradfahren, sowie einen Komfortgewinn für den Benutzer des Fahrrades dar.

Gemäß einem weiteren Aspekt der Erfindung wird eine Schaltung zur verzögerungsinduzierten Steuerung einer Beleuchtungseinrichtung eines Fahrrades mit einem Frontscheinwerfer, einem Rücklicht und einem Nabendynamo, vorgeschlagen, wobei die Beleuchtungseinrichtung in einem Betriebsmodus, der ein erster Normalmodus, in dem Frontscheinwerfer und Rücklicht elektrisch parallel mit dem Nabendynamo verbunden sind, oder ein zweiter Normalmodus, in dem Frontscheinwerfer und Rücklicht grundsätzlich nicht elektrisch mit dem Nabendynamo verbunden sind, sein kann, oder einem Verzögerungsmodus betrieben wird, wobei die Schaltung umfasst:
mindestens eine Steuereinheit;
mindestens eine Auswerteeinheit, die über Signalleitungen mit der Steuereinheit und dem Nabendynamo verbunden ist; und
ein Schaltmittel, das mindestens einen Steuereingang, der über Signalleitungen mit der Steuereinheit verbunden ist und Schaltein- und -ausgänge aufweist, wobei mindestens ein Schaltein- und -ausgang mit dem Stromkreis, durch den Nabendynamo, Rücklicht und Frontscheinwerfer verbunden sind, verbunden ist,
wobei die Auswerteeinheit einen ersten zeitlichen Abstand Dt1 zweier Nulldurchgänge der durch den Nabendynamo erzeugten Spannung bestimmt, der über die Signalleitungen an die Steuereinheit übertragen wird, die, falls ein Quotient aus dem erstem zeitlichen Abstand und einem früheren zweiten zeitlichen Abstand Dt2 zweier Nulldurchgänge der durch den Nabendynamo erzeugten Spannung größer als ein vorgegebener Grenzwert ist und die Beleuchtungseinheit im Betriebsmodus betrieben wird, einen ersten Schaltimpuls über die Signalleitungen an das Schaltmittel überträgt, worauf dieses die Beleuchtungseinheit von dem Betriebsmodus in einen Verzögerungsmodus schaltet, und die, falls der Quotient kleiner oder gleich eins ist, eine Pufferzeit seit dem letzten Auftreten eines Quotienten kleiner als der Grenzwert verstrichen ist und die Beleuchtungseinheit im Verzögerungsmodus betrieben wird, einen zweiten Schaltimpuls über die Signalleitungen an das Schaltmittel überträgt, worauf dieses die Beleuchtungseinheit in den Betriebsmodus versetzt.

Eine solche Schaltung kann insbesondere in vorteilhafter Weise der Durchführung des erfindungsgemäßen Verfahrens dienen.

Gemäß einer vorteilhaften Ausgestaltung der Schaltung verbindet das Schaltmittel auf den ersten Schaltimpuls zumindest das Rücklicht elektrisch parallel mit dem Nabendynamo, falls der Betriebsmodus der zweite Normalmodus ist und/oder schaltet im Verzögerungsmodus mindestens ein zusätzliches Warnlicht ein.

Gemäß einer vorteilhaften Ausgestaltung der erfindungsgemäßen Schaltung sind Mittel zum Einstellen des Grenzwerts G, Mittel zum Einstellen der Pufferzeit und/oder Mittel zum Einstellen der Anzahl von Nulldurchgängen, die zwischen den zwei Nulldurchgängen liegt, deren zeitlicher Abstand der erste zeitliche Abstand Dt1 oder der zweite zeitliche Abstand Dt2 ist,ausgebildet.

In vorteilhafter Weise kann ein Helligkeitssensor ausgebildet sein, der mit der Steuereinheit verbunden ist.

Gemäß einer weiteren vorteilhaften Ausgestaltung der Schaltung sind die Steuereinheit und/oder die Auswerteeinheit Teil eines Fahrradcomputers oder mit einem solchen verbindbar.

Dies gestattet in vorteilhafter Weise eine Integration eines Fahrradcomputers, der dem Benutzer die Geschwindigkeit, bereits gefahrene Kilometer, etc. anzeigt. So kann vorteilhafterweise der sonst übliche Radsensor, über den der Fahrradcomputer die Geschwindigkeit des Fahrrades, sowie die gefahrenen Kilometer bestimmt, entfallen. Weiterhin ist es bei einer weiteren Vernetzung des Fahrradcomputers mit Auswerte- und/oder Steuereinheit möglich, beispielsweise die Nachtbeleuchtung des Fahrradcomputers auch über einen gegebenenfalls ausgebildeten Helligkeitssensor zu steuern. Auch die Realisierung der Stromversorgung des Fahrradcomputers über den Nabendynamo ist möglich.

Sämtliche oben im Zusammenhang mit dem erfindungsgemäßen Verfahren Vorteile und Details sind in gleicher Weise auf die Schaltung anwendbar und vorteilhaft.

Weitere Ausgestaltungen und bevorzugte Ausführungsbeispiele werden im folgenden anhand der Zeichnung beschrieben, jedoch ist die Erfindung nicht auf diese beschränkt. Es zeigen
- Fig. 1: eine schematische Darstellung einer das erfindungsgemäße Verfahren umsetzenden Schaltung; und
- Fig. 2: eine schematische Darstellung einer Steuereinheit.

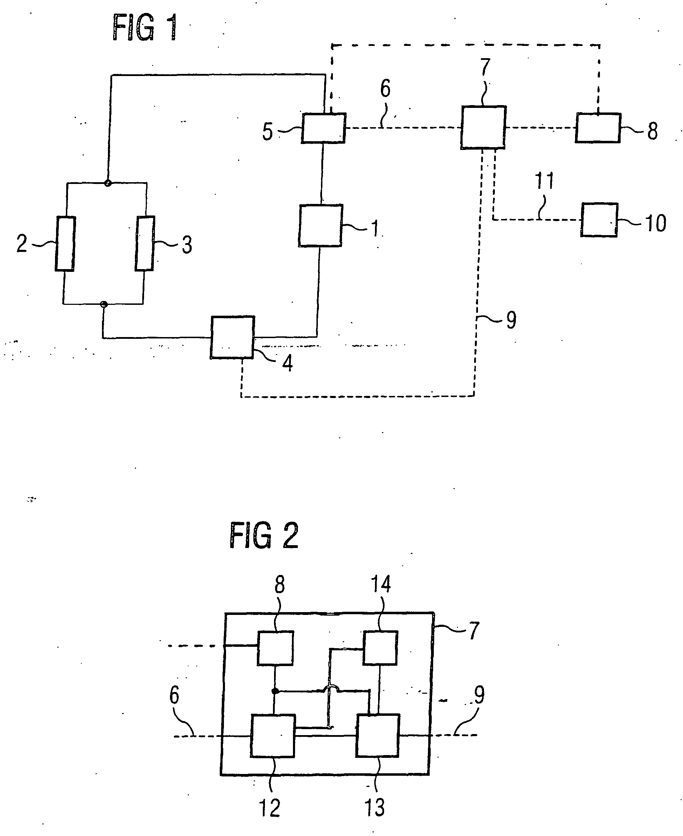

Fig. 1 zeigt schematisch einen Schaltkreis, der eine Beleuchtungseinrichtung eines Fahrrades umfasst. Diese besteht aus einem Nabendynamo 1, einem Frontscheinwerfer 2 und einem Rücklicht 3. In diesem die Beleuchtungseinheit bildenden Stromkreis befinden sich ferner ein Schaltmittel 4 und eine Auswerteeinheit 5. Das Schaltmittel 4 verfügt über Schaltein- und Ausgänge, die mit dem Stromkreis verbunden sind. Ferner verfügt das Schaltmittel 4 über einen Steuereingang, der über die Signalleitung 9 mit einer Steuereinheit 7 verbunden ist. Das Schaltmittel 4 schaltet je nachdem, was für Signale an dem Steuereingang anliegen, die Schaltein- und -ausgänge. Das Schaltmittel muss nicht so wie gezeigt mittels der Schaltein- und -ausgänge direkt mit dem Stromkreis verbunden sein, vielmehr kann das Schaltmittel 4 auch zusätzliche Elemente zum Beispiel mit dem Frontscheinwerfer 2 oder dem Rücklicht 3 verbinden, oder auch zusätzliche Warnlichter zuschalten.

Es lassen sich in Bezug auf die grundlegenden Elemente der Beleuchtungseinheit, also den Frontscheinwerfer 2, das Rücklicht 3 und den Nabendynamo 1, grundsätzlich zwei Betriebsmodi unterscheiden: In einem ersten Normalmodus sind der Frontscheinwerfer 2 und das Rücklicht 3 elektrisch parallel mit dem Nabendynamo 1 verbunden, in einem zweiten Normalmodus sind der Frontscheinwerfer 2 und das Rücklicht 3 elektrisch grundsätzlich nicht mit dem Nabendynamo 1 verbunden. Der Betriebsmodus kann durch weitere, nicht eingezeichnete Schaltmittel beeinflusst werden. Dies können beispielsweise sogenannte Moduswähler sein, die dem Benutzer des Fahrrades den Wechsel zwischen dem ersten und dem zweiten Normalmodus erlauben. Im zweiten Normalmodus sollen Frontscheinwerfer 2 und Rücklicht 3 grundsätzlich nicht elektrisch mit dem Nabendynamo 1 verbunden sein, eine solche Verbindung kann jedoch unter gewissen Umständen gewollt sein.

Der Nabendynamo 1 erzeugt eine Wechselspannung, die grundsätzlich der Versorgung elektrischer Baueinheiten wie beispielsweise Frontscheinwerfer 2 und Rücklicht 3 dient. Der Nabendynamo 1 ist in einer der Naben des Vorder- oder Hinterrades, bevorzugt des Vorderrades, ausgebildet und läuft im wesentlichen ständig mit. Die dabei erzeugte Wechselspannung wird in der Auswerteeinheit 5 ausgewertet, in dem ein zeitlicher Abstand Dt1 zweier Nulldurchgänge der durch den Nabendynamo 1 erzeugten Wechselspannung bestimmt wird. Die Auswerteeinheit kann über eine Signalleitung mit einer Zeitbasis 8 verbunden sein oder eine solche integriert enthalten. Die Auswerteeinheit 5 ist über eine erste Signalleitung 6 mit einer Steuereinheit 7 verbunden. In der Steuereinheit 7 erfolgt ein Abgleich des ersten zeitlichen Abstandes Dt1 mit einem zweiten zeitlichen Abstand Dt2 zweier Nulldurchgänge der durch den Nabendynamo 1 erzeugten Wechselspannung. Bei dem zweiten zeitlichen Abstand Dt2 handelt es sich um einen früheren zeitlichen Abstand, der in der Steuereinheit vorgehalten wird. In der Steuereinheit 7 wird ein Quotient Q aus dem ersten zeitlichen Abstand Dt1 und dem zweiten zeitlichen Abstand Dt2 gebildet und mit einem Grenzwert G verglichen. Ist der Quotient Q größer als der Grenzwert G, so wird die Beleuchtungseinheit in den Verzögerungsmodus versetzt, falls die Beleuchtungseinheit im Betriebsmodus ist. Dies geschieht über das Schaltmittel, indem eine elektrische Verbindung zwischen entsprechenden Bauteilen hergestellt wird. In Figur 1 ist beispielhaft gezeigt, das Frontscheinwerfer 2 und Rücklicht 3 zugeschaltet werde, falls die Steuereinheit 7 einen entsprechenden Steuerimpuls an den Steuereingang des Schaltmittels 4 übermittelt, jedoch sind auch andere Möglichkeiten denkbar.

Liegt eine Verzögerung des Fahrrades vor, so wird der Quotient Q größer als 1, da dann der zweite zeitliche Abstand Dt1 aufgrund der langsameren Rotationsfrequenz des Reifens größer ist als der frühere zweite zeitliche Abstand Dt2. Um jedoch zu verhindern, dass bei jeder durch den Fahrer erzeugten leichten Schwankung der Rotationsfrequenz, wie sie beispielsweise durch ungleichmässiges Treten der Pedale erzeugt wird, bereits die Beleuchtungseinheit in den Verzögerungsmodus versetzt wird, ist es vorteilhaft, den Quotienten Q nicht mit einem Wert 1, sondern mit einem vorgebbaren Grenzwert G, vorzugsweise größer als 1, zu vergleichen, der vorteilhafterweise auch durch den Benutzer einstellbar ist, beispielsweise mittels eines entsprechenden Einstellmittels. Im Falle einer Fahrt mit gleichbleibendem Tempo ist der Quotient 1, im Falle einer Beschleunigung kleiner als 1. Wenn sich die Beleuchtungseinheit in dem Verzögerungsmodus befindet und der Quotient kleiner oder gleich 1 ist, wird überprüft, ob seit dem letzten Vorliegen eines Quotienten größer als der Grenzwert G bereits eine Pufferzeit verstrichen ist. Wenn dies der Fall ist, wird die Beleuchtungseinheit vom Verzögerungsmodus in den Betriebsmodus, der vor Übergang in den Verzögerungsmodus vorlag, zurückgesetzt. Dies ist der erste oder der zweite Normalmodus.

Zur Messung der Pufferzeit ist eine Zeitbasis 8 ausgebildet, die in Bezug auf die Steuereinheit 7 extern oder intern ausgeführt sein kann. Die Zeitbasis 8 ist auch mit der Auswerteeinheit 5 verbunden, um die Zeitmessung der zeitlichen Abstände Dt1 zu ermöglichen. Die Zeitbasis 8 kann auch in die Auswerteeinheit 5 integriert sein. Die Pufferzeit kann vorzugsweise je nach Anwendungsfall weniger als 5 Sekunden, bevorzugt weniger als 3 Sekunden und besonders bevorzugt weniger als 2 Sekunden betragen, auch eine Pufferzeit von null ist möglich und erfindungsgemäß.

Eine Pufferzeit von größer als null, beispielsweise 2 Sekunden, verhindert bei normaler Fahrweise eine Irritation des rückwärtigen Verkehrs, da die Beleuchtungseinheit mindestens für die Pufferzeit im Verzögerungsmodus verbleibt. Beispielsweise kann es bei einer sportlichen Fahrweise jedoch auch vorteilhaft sein, die Pufferzeit sehr kurz oder auch auf null zu setzen, um schnell auf Geschwindigkeitsänderungen reagieren zu können.

Die Bestimmung der Verzögerung des Fahrrades erfolgt quasi kontinuierlich, praktisch zu jedem Zeitpunkt liegen Werte für die aktuelle Verzögerung vor. Dies beruht darauf, dass zumeist in einem Nabendynamo 1 relativ viele Pole eingesetzt werden, so dass es demzufolge auch zu relativ vielen Nulldurchgängen kommt.

Für die Betriebsweise der Beleuchtungseinheit im Verzögerungsmodus existiert eine Vielzahl von Möglichkeiten. Beispielsweise kann dann, wenn der zweite Normalmodus als Betriebsmodus vorliegt, der Verzögerungsmodus darin bestehen, dass zumindest das Rücklicht 3 elektrisch mit dem Nabendynamo 1 verbunden wird. Gegebenenfalls können sowohl der Frontscheinwerfer 2, als auch das Rücklicht 3 elektrisch parallel mit dem Nabendynamo 1 verbunden werden. Dies kann in einfacher Weise wie in Figur 1 beispielhaft gezeigt dadurch geschehen, dass das Schaltmittel 4 mit einem Schalteingang und einem zugehörigen Schaltausgang in den Stromkreis integriert ist, durch den Nabendynamo 1, Frontscheinwerfer 2 und Rücklicht 3 miteinander verbunden sind. Es kann aber auch vorteilhaft sein, im Verzögerungsmodus zumindest das Rücklicht 3 heller zu betreiben als im ersten Normalmodus und/oder zumindest das Rücklicht 3 mit einem modulierten Strom zu betreiben, was zu einem Flackern des Rücklichtes 3 führen würde. Die letzten beiden Möglichkeiten sind besonders vorteilhaft, wenn die Beleuchtungseinheit im ersten Normalmodus betrieben wird. Weiterhin ist im Verzögerungsmodus auch die Zuschaltung von zusätzlichen Warnlichtern, insbesondere rückwärtigen zusätzlichen Warnlichtern, vorteilhaft und erfindungsgemäß. Diese und andere Möglichkeiten, die Beleuchtungseinheit im Verzögerungsmodus zu betreiben, können durch entsprechende Auslegung des Schaltmittels 4 mit verschiedenen anzusteuernden Schaltwegen und gegebenenfalls anderer Bauteile verwirklicht werden.

Weiterhin ist es vorteilhaft möglich, einen Helligkeitssensor 10 über eine dritte Signalleitung 11 mit der Steuereinheit 7 zu verbinden. Der Helligkeitssensor 10 ist so ausgestaltet, dass er ein Signal liefert, das z. B. proportional zur am Helligkeitssensor 10 anliegenden Helligkeit ist. Das Signal des Helligkeitssensors 10 wird in der Steuereinheit 7 verarbeitet. Insbesondere kann ein Vergleich mit einem vorgegebenen Helligkeitsgrenzwert erfolgen, bei dessen Unterschreiten für den Fall, dass der zweite Normalmodus als Betriebsmodus vorliegt, ein Befehl über die zweite Signalleitung 9 an die Schalteinheit 4 gegeben wird, der diese veranlasst, den Frontscheinwerfer 2 und das Rücklicht 3 elektrisch parallel mit dem Nabendynamo 1 zu verbinden.

Die Erweiterung der Schaltung um einen Helligkeitssensor 10 bedeutet eine weitere Verbesserung des Komforts für den Benutzer des Fahrrades, da jetzt dann, wenn die Umgebung des Helligkeitssensors 10 zu dunkel wird, der Frontscheinwerfer und das Rücklicht des Fahrrades eingeschaltet werden. Weiterhin ist es auch möglich, wie oben erwähnt, einen manuellen Moduswähler vorzusehen, durch den der erste Beleuchtungsmodus angewählt werden kann. Ein solcher ist in dieser schematischen Zeichnung nicht eingezeichnet, ist jedoch ebenso erfindungsgemäß.

Weiterhin ist es auch möglich und erfindungsgemäß, dass der Grenzwert G und/oder die Pufferzeit beispielsweise durch die Steuereinheit 7 adaptiv an die jeweilige Situation, beispielsweise Steigungen, Fahrstil, mittlere Geschwindigkeit und ähnliches angepasst wird. Bei dieser Adaption können auch weitere äußere Größen berücksichtigt werden, die über weitere Sensoren oder unter Ausnutzung weiterer vorliegender Daten ermittelt werden, beispielsweise über Neigungssensoren oder ähnliches. Auch eine Art Vernetzung mit einem gegebenenfalls vorhandenen Fahrradcomputer ist möglich und erfindungsgemäß. Sowohl für die Pufferzeit, als auch für den Grenzwert G kann eine manuelle Einstellmöglichkeit vorgesehen werden, die kumulativ oder alternativ zur adaptiven Anpassung ist.

Bei den zeitlichen Abständen Dt1, Dt2 zwischen zwei Nulldurchgängen der durch den Nabendynamo 1 erzeugten Wechselspannung kann es sich jeweils um den Abstand zweier direkt aufeinanderfolgender Nulldurchgänge handeln, jedoch ist es genauso gut möglich und erfindungsgemäß, eine von Null verschiedene Anzahl von Nulldurchgängen zwischen den Nulldurchgängen abzuwarten, deren Abstand die zeitlichen Abstände Dt1, Dt2 bilden. Ist diese Anzahl gleich Null, sind also die zeitlichen Abstände Dt1, Dt2 die Abstände direkt aufeinanderfolgender Nulldurchgänge, so erfolgt der Übergang in den Verzögerungsmodus sehr schnell, wobei eine von Null verschiedene Anzahl den Vorteil haben kann, dass die Genauigkeit der Bestimmung der zeitlichen Abstände erhöht wird und somit auch die Genauigkeit der Bestimmung des Quotienten Q. Welche Anzahl von Nulldurchgängen zwischen den Nulldurchgängen, deren zeitliche Abstände Dt1, Dt2 in die Quotientenbildung einfließen, liegt, ist je nach Situation wählbar und kann einstellbar oder selbstadaptiv ausgewählt werden, so lange der erste zeitliche Abstand Dt1 sich auf eine identische Zahl Nulldurchgänge bezieht wie der zweite zeitliche Abstand Dt2.

Figur 2 zeigt ein Beispiel einer integrierten Steuereinheit 7, die eine Dividierschaltung 12 und ein Vergleichsmittel 13 enthält. Die Steuereinheit 7 wird über die erste Signalleitung 6 mit den Daten, also dem ersten zeitlichen Abstand Dt1, der - nicht eingezeichneten - Auswerteeinheit 5 versorgt. Aus dem ersten zeitlichen Abstand Dt1 und dem vom Speicher 14 übertragenen zweiten zeitlichen Abstand Dt2 wird in der Dividierschaltung 12 der Quotient Q aus dem ersten Dt1 und dem zweiten zeitlichen Abstand Dt1 gebildet und dieser an das Vergleichsmittel übertragen. In diesem wird der Quotient Q mit einem vorgebbaren Grenzwert G, der auch im Speicher 14 abgespeichert ist, verglichen. Wenn der Quotient Q größer ist als der Grenzwert G und sich die Beleuchtungseinheit im Betriebsmodus befindet, wird die Beleuchtungseinheit durch ein Signal, das durch die zweite Signalleitung 9 abgegeben wird, in den Verzögerungsmodus versetzt. Falls der Quotient kleiner oder gleich 1 ist, wird im Vergleichsmittel 13 die Zeit, die seit dem letzten Auftreten eines Quotienten Q größer als der Grenzwert G, verstrichen ist, mit einer Pufferzeit verglichen. Ist die verstrichene Zeit größer als die Pufferzeit, wird die Beleuchtungseinheit zurück in den Betriebsmodus versetzt. Hierzu ist die Zeitbasis 8 mit dem Vergleichsmittel 13 verbunden. Vorteilhafterweise wird der aktuelle Wert des ersten zeitlichen Abstandes Dt1 im Speicher 14 gespeichert und in weiteren Vergleichen als zeitlicher Abstand Dt2 aus dem Speicher 14 ausgelesen.

Auch in diesem Ausführungsbeispiel einer Steuereinheit 7 kann ein weiterer Eingang für einen Helligkeitssensor 10 vorgesehen sein. In einem solchen Fall könnten Vergleichswerte für die Helligkeit in vorteilhafter Weise im Speicher 14 gespeichert werden.

Eine das erfindungsgemäße Verfahren umsetzende Schaltung ermöglicht in vorteilhafter Weise den verzögerungsinduzierten Betrieb einer Beleuchtungseinrichtung praktisch ohne zeitliche Trägheit, also mit nur einer geringen verstreichenden Zeitspanne zwischen Einsetzen der Verzögerung und Versetzen der Beleuchtungseinheit in den Verzögerungsmodus.

### Bezugszeichenliste

- 1: Nabendynamo
- 2: Frontscheinwerfer
- 3: Rücklicht
- 4: Schaltmittel
- 5: Auswerteeinheit
- 6: erste Signalleitung
- 7: Steuereinheit
- 8: Zeitbasis
- 9: zweite Signalleitung
- 10: Helligkeitssensor
- 11: dritte Signalleitung
- 12: Dividierschaltung
- 13: Vergleichsmittel
- 14: Speicher

- Dt1: erster zeitlicher Abstand
- Dt2: zweiter zeitlicher Abstand
- G: Grenzwert
- Q: Quotient

## Patentansprüche

1. Verfahren zur Steuerung einer Beleuchtungseinrichtung eines Fahrrades, wobei die Beleuchtungseinrichtung einen Nabendynamo (1), einen Frontscheinwerfer (2) und ein Rücklicht (3) umfasst, wobei die Beleuchtungseinrichtung in einem ersten Normalmodus, in dem Frontscheinwerfer (2) und Rücklicht (3) elektrisch parallel mit dem Nabendynamo (1) verbunden sind, einem zweiten Normalmodus, in dem Frontscheinwerfer (2) und Rücklicht (3) grundsätzlich nicht elektrisch mit dem Nabendynamo (1) verbunden sind, oder in einem Verzögerungsmodus betrieben werden kann, umfassend die folgenden Schritte:
a) Bestimmung eines Betriebsmodus der Beleuchtungseinrichtung, der gleich dem ersten oder dem zweiten Normalmodus sein kann;
b) Bestimmung eines ersten zeitlichen Abstandes (Dt1) zweier Nulldurchgänge der durch den Nabendynamo (1) erzeugten elektrischen Spannung;
c) Berechnung eines Quotienten (Q) aus dem ersten zeitlichen Abstand (Dt1) und einem früheren zweiten zeitlichen Abstand (Dt2) zweier Nulldurchgänge der durch den Nabendynamo (1) erzeugten elektrischen Spannung;
d) Schalten der Beleuchtungseinrichtung in den Verzögerungsmodus, wenn der Quotient (Q) größer als ein vorgegebener Grenzwert (G) ist, falls die Beleuchtungseinrichtung im Betriebsmodus betrieben wird;
e) Schalten der Beleuchtungseinrichtung in den Betriebsmodus, wenn der Quotient (Q) kleiner oder gleich 1 ist, falls die Beleuchtungseinrichtung im Verzögerungsmodus betrieben wird und eine Pufferzeit seit dem letzten Auftreten eines Quotienten (Q), der kleiner als der vorgegebene Grenzwert (G) ist, verstrichen ist.

2. Verfahren nach Anspruch 1, **dadurch gekennzeichnet, dass** im Verzögerungsmodus zumindest das Rücklicht (3) elektrisch parallel mit dem Nabendynamo (1) verbunden ist, falls der Betriebsmodus der zweite Normalmodus ist.

3. Verfahren nach einem der vorhergehenden Ansprüche, **dadurch gekennzeichnet, dass** im Verzögerungsmodus zumindest das Rücklicht (3) heller als im ersten Normalmodus und/oder moduliert und/oder zumindest ein zusätzliches Warnlicht betrieben wird.

4. Verfahren nach einem der vorhergehenden Ansprüche, **dadurch gekennzeichnet, dass** die Pufferzeit einstellbar ist.

5. Verfahren nach einem der vorhergehenden Ansprüche, **dadurch gekennzeichnet, dass** der Grenzwert (G) und/oder die Anzahl von Nulldurchgängen zwischen dem ersten (Dt1) und dem zweiten zeitlichen Abstand (Dt2) einstellbar ist.

6. Verfahren nach einem der vorhergehenden Ansprüche, **dadurch gekennzeichnet, dass** sich der Grenzwert (G) in Abhängigkeit von der Art und Weise des Betriebes des Fahrrades ändert.

7. Schaltung zur verzögerungsinduzierten Steuerung einer Beleuchtungseinrichtung eines Fahrrades mit einem Frontscheinwerfer (2), einem Rücklicht (3) und einem Nabendynamo (1), die in einem Betriebsmodus, der ein erster Normalmodus, in dem Frontscheinwerfer (2) und Rücklicht (3) elektrisch parallel mit dem Nabendynamo (1) verbunden sind, oder ein zweiter Normalmodus, in dem Frontscheinwerfer (2) und Rücklicht (3) grundsätzlich nicht elektrisch mit dem Nabendynamo (1) verbunden sind, sein kann, oder einem Verzögerungsmodus betrieben wird, umfassend:
mindestens eine Steuereinheit (7);
mindestens eine Auswerteeinheit (5), die über Signalleitungen (6) mit der Steuereinheit (7) und dem Nabendynamo (1) verbunden ist; und
ein Schaltmittel (4), das mindestens einen Steuereingang, der über Signalleitungen (9) mit der Steuereinheit (7) verbunden ist und mindestens einen Schaltweg aufweist, wobei mindestens ein Schaltweg mit dem Stromkreis, durch den Nabendynamo (1), Rücklicht (3) und Frontscheinwerfer (2) verbunden sind, verbunden ist,
**dadurch gekennzeichnet, dass** die Auswerteeinheit (5) einen ersten zeitlichen Abstand (Dt1) zweier Nulldurchgänge der durch den Nabendynamo (1) erzeugten Spannung bestimmt, der über die Signalleitungen (6) an die Steuereinheit (7) übertragen wird, die, falls ein Quotient (Q) aus dem erstem zeitlichen Abstand (Dt1) und einem früheren zweiten zeitlichen Abstand (Dt2) zweier Nulldurchgänge der durch den Nabendynamo (1) erzeugten Spannung größer als ein vorgegebener Grenzwert (G) ist und die Beleuchtungseinheit im Betriebsmodus betrieben wird, einen ersten Schaltimpuls über die Signalleitungen (9) an das Schaltmittel (4) überträgt, worauf dieses die Beleuchtungseinheit von dem Betriebsmodus in einen Verzögerungsmodus schaltet, und die, falls der Quotient (Q) kleiner oder gleich eins ist, eine Pufferzeit seit dem letzten Auftreten eines Quotienten (Q) kleiner als der Grenzwert (G) verstrichen ist und die Beleuchtungseinheit im Verzögerungsmodus betrieben wird, einen zweiten Schaltimpuls über die Signalleitungen (9) an das Schaltmittel (4) überträgt, worauf dieses die Beleuchtungseinheit in den Betriebsmodus versetzt.

8. Schaltung nach Anspruch 7, **dadurch gekennzeichnet, dass** das Schaltmittel auf den ersten Schaltimpuls zumindest das Rücklicht elektrisch parallel mit dem Nabendynamo verbindet, falls der Betriebsmodus der zweite Normalmodus ist und/oder im Verzögerungsmodus mindestens ein zusätzliches Warnlicht einschaltet.

9. Schaltung nach Anspruch 7 oder 8, **dadurch gekennzeichnet, dass** Mittel zum Einstellen des Grenzwerts (G), Mittel zum Einstellen der Pufferzeit und/oder Mittel zum Einstellen der Anzahl von Nulldurchgängen, die zwischen den zwei Nulldurchgängen liegt, deren zeitlicher Abstand der erste zeitliche Abstand (Dt1) oder der zweite zeitliche Abstand (Dt2) ist, ausgebildet sind.

10. Schaltung nach einem der Ansprüche 7 bis 9, **dadurch gekennzeichnet, dass** die Steuereinheit (7) und/oder die Auswerteeinheit (5) Teil eines Fahrradcomputers oder mit einem solchen verbindbar sind.

## Claims

1. Method for controlling a lighting device of a bicycle, the lighting device comprising a hub dynamo (1), a front headlamp (2) and a rear light (3), the lighting device being capable of being operated in a first normal mode, in which the front headlamp (2) and the rear light (3) are connected electrically in parallel with the hub dynamo (1), in a second normal mode, in which the front headlamp (2) and the rear light (3) are in principle not electrically connected to the hub dynamo (1), or in a deceleration mode, comprising the following steps:
a) determining an operating mode of the lighting device which may be the same as the first or the second normal mode;
b) determining a first time interval (Dt1) between the two zero crossings of the electrical voltage generated by the hub dynamo (1);
c) calculating a quotient (Q) from the first time interval (Dt1) and an earlier, second time interval (Dt2) between two zero crossings of the electrical voltage generated by the hub dynamo (1) ;
d) switching the lighting device into the deceleration mode if the quotient (Q) is greater than a predetermined limit value (G), if the lighting device is operated in the operating mode;
e) switching the lighting device into the operating mode if the quotient (Q) is less than or equal to 1, if the lighting device is operated in the deceleration mode and a buffer time since the last occurrence of a quotient (Q) which is smaller than the predetermined limit value (G) has elapsed.

2. Method according to Claim 1, **characterized in that**, in the deceleration mode, at least the rear light (3) is connected electrically in parallel with the hub dynamo (1), if the operating mode is the second normal mode.

3. Method according to one of the preceding claims, **characterized in that**, in the deceleration mode, at least the rear light (3) is brighter than in the first normal mode and/or is modulated and/or at least an additional warning light is operated.

4. Method according to one of the preceding claims, **characterized in that** the buffer time can be adjusted.

5. Method according to one of the preceding claims, **characterized in that** the limit value (G) and/or the number of zero crossings between the first (Dt1) and the second time interval (Dt2) can be adjusted.

6. Method according to one of the preceding claims, **characterized in that** the limit value (G) changes as a function of the type of operation of the bicycle.

7. Circuit for the deceleration-induced control of a lighting device of a bicycle having a front headlamp (2), a rear light (3), and a hub dynamo (1), which lighting device is operated in an operating mode, which may be a first normal mode, in which the front headlamp (2) and the rear light (3) are connected electrically in parallel with the hub dynamo (1), or may be a second normal mode, in which the front headlamp (2) and the rear light (3) are in principle not electrically connected to the hub dynamo (1), or in a deceleration mode, comprising: at least one control unit (7);
at least one evaluation unit (5), which is connected to the control unit (7) and the hub dynamo (1) via signal lines (6); and
a switching means (4) which is connected to at least one control input, which is connected to the control unit (7) via signal lines (9) and has at least one switching path, at least one switching path being connected to the circuit, by which the hub dynamo (1), the rear light (3) and the front headlamp (2) are connected,
**characterized in that** the evaluation unit (5) determines a first time interval (Dt1) between two zero crossings of the voltage generated by the hub dynamo (1) which is transmitted to the control unit (7) via the signal lines (6), which control unit (7), if a quotient (Q) of the first time interval (Dt1) and an earlier second time interval (Dt2) between two zero crossings of the voltage generated by the hub dynamo (1) is greater than a predetermined limit value (G) and the lighting unit is operated in the operating mode, transmits a first switching pulse to the switching means (4) via the signal lines (9), whereupon said switching means (4) switches the lighting unit from the operating mode into a deceleration mode, and which control unit (7), if the quotient (Q) is less than or equal to 1, a buffer time since the last occurrence of a quotient (Q) smaller than the limit value (G) has elapsed and the lighting unit is operated in the deceleration mode, transmits a second switching pulse to the switching means (4) via the signal lines (9), whereupon said switching means (4) moves the lighting unit over to the operating mode.

8. Circuit according to Claim 7, **characterized in that** the switching means connects at least the rear light electrically in parallel with the hub dynamo upon the first switching pulse if the operating mode is the second normal mode and/or, in the deceleration mode, switches on at least one additional warning light.

9. Circuit according to Claim 7 or 8, **characterized in that** means for adjusting the limit value (G), means for adjusting the buffer time and/or means for adjusting the number of zero crossings which are present between the two zero crossings whose time interval is the first time interval (Dt1) or the second time interval (Dt2) are formed.

10. Circuit according to one of Claims 7 to 9, **characterized in that** the control unit (7) and/or the evaluation unit (5) are part of a bicycle computer or can be connected to such a bicycle computer.

## Revendications

1. Procédé pour commander un dispositif d'éclairage d'une bicyclette, le dispositif d'éclairage comportant une dynamo de moyeu (1), un projecteur avant (2) et un feu arrière (3), dans quel cas le dispositif d'éclairage peut être opéré dans un premier mode normal, dans lequel les projecteurs avant (2) et le feu arrière (3) sont liés électriquement en parallèle à la dynamo de moyeu (1), dans un deuxième mode normal, dans lequel le projecteur avant (2) et le feu arrière (3) ne sont principalement pas reliés électriquement à la dynamo de moyeu (1), ou dans un mode de décélération, comportant les étapes suivantes :
a) détermination d'un mode d'opération du dispositif d'éclairage, qui peut être le même que le premier ou le deuxième mode normal ;
b) détermination d'un premier intervalle de temps (Dt1) de deux passages par zéro de la tension électrique générée par le dynamo de moyeu (1) ;
c) calcul d'un quotient (Q) du premier intervalle de temps (Dt1) et d'un ancien deuxième intervalle de temps (Dt2) de deux passages par zéro de la tension électrique générée par la dynamo de moyeu (1) ;
d) commutation du dispositif d'éclairage dans le mode de décélération, quand le quotient (Q) est plus grand qu'une valeur limite prédéterminée (G), au cas où le dispositif d'éclairage serait opéré dans le mode d'opération ;
e) commutation du dispositif d'éclairage dans le mode d'opération, quand le quotient (Q) est plus petit ou égal à 1, au cas où le dispositif d'éclairage serait opéré en mode de décélération et une marge de temps est passée depuis la dernière apparition d'un quotient (Q) qui est plus petit que la valeur limite (G) prédéterminée.

2. Procédé selon la revendication 1, **caractérisé en ce que** dans le mode de décélération au moins le feu arrière (3) est relié électro-parallèlement à la dynamo de moyeu (1), au cas où le mode d'opération serait le deuxième mode normal.

3. Procédé selon l'une des revendications précédentes, **caractérisé en ce que** dans le mode de décélération au moins le feu arrière (3) est opéré et/ou modulé de manière à être plus clair que dans le premier mode normal et/où au moins un feu de signalisation supplémentaire est opéré.

4. Procédé selon l'une des revendications précédentes, **caractérisé en ce que** la marge de temps est ajustable.

5. Procédé selon l'une des revendications précédentes, **caractérisé en ce que** la valeur limite (G) et/ou le nombre de passages par zéro entre le premier intervalle de temps (Dt1) et le deuxième intervalle de temps (Dt2) peut être ajusté.

6. Procédé selon l'une des revendications précédentes, **caractérisé en ce que** la valeur limite (G) est modifiée en fonction de la façon d'opération de la bicyclette.

7. Circuit pour la commande par induction retardée d'un dispositif d'éclairage d'une bicyclette, comportant un projecteur avant (2), un feu arrière (3) et une dynamo de moyeu (1) qui sont reliés dans un mode d'opération, qui peut être un premier mode normal, dans lequel le projecteur avant (2) et le feu arrière (3) sont liés électriquement en parallèle à la dynamo de moyeu (1), ou un deuxième mode normal, dans lequel le projecteur avant (2) et le feu arrière (3) ne sont principalement pas reliés électriquement à la dynamo de moyeu (1), ou dans un mode de retardement, comportant :
au moins une unité de commande (7) ;
au moins une unité d'évaluation (5), qui est reliée à l'unité de commande (7) et à la dynamo de moyeu (1) à l'intermédiaire de câblages de signalisation (6) ; et
un moyen de commutation (4) qui a au moins une entrée de commande qui est reliée à l'unité de commande (7) à l'intermédiaire de câblages de signalisation (9) et qui a au moins un trajet de commutation, dans quel cas au moins un trajet de commutation est relié au circuit par la dynamo de moyeu (1), le feu arrière (3) et les projecteurs avant, **caractérisé en ce que** l'unité d'évaluation (5) détermine un premier intervalle de temps (Dt1) entre deux passages par zéro de la tension générée par la dynamo de moyeu (1), qui est transmis à l'unité de commande (7) à l'intermédiaire des câblages de signalisation (6), qui, au cas où un quotient (Q) du premier intervalle de temps (Dt1) et d'un ancien deuxième intervalle de temps (Dt2) de deux passages par zéro de la tension générée par la dynamo de moyeu (1) serait plus grand qu'une valeur limite (G) prédéterminée et l'unité d'éclairage serait opérée dans le mode d'opération, transmet une première impulsion de commutation au moyen de commutation (4) à l'intermédiaire des câblages de signalisation (9), sur quoi le moyen de commutation (4) commute l'unité d'éclairage du mode d'opération dans un mode de décélération et qui, au cas où le quotient (Q) serait plus petit ou égal à un, depuis la dernière survenance d'un quotient (Q) plus petit que la valeur limite (G) une marge de temps étant passée, l'unité d'éclairage étant opérée en mode de décélération, transmet une deuxième impulsion de commutation au moyen de commutation (4) à l'intermédiaire des câblages de signalisation (9), sur quoi le moyen de commutation (4) mute l'unité d'éclairage dans le mode d'opération.

8. Circuit selon la revendication 7, **caractérisé en ce que** le moyen de commutation, après la première impulsion de commutation, relie au moins électriquement en parallèle le feu arrière à la dynamo de moyeu, au cas où le mode d'opération serait le deuxième mode normal et/ou en mode de décélération met en marche au moins un feu de signalisation supplémentaire.

9. Circuit selon la revendication 7 ou 8, **caractérisé en ce que** des moyens pour ajuster la valeur limite (G), des moyens pour ajuster la marge de temps et/ou des moyens pour ajuster le nombre des passages par zéro qui se trouve entre les deux passages par zéro, dont l'intervalle de temps est le premier intervalle de temps (Dt1) ou le deuxième intervalle de temps (Dt2), sont formés.

10. Circuit selon l'une des revendications 7 à 9, **caractérisé en ce que** l'unité de commande (7) et/ou l'unité d'évaluation (5) font partie d'un ordinateur de bicyclette ou peuvent être reliées à un tel.
